# EUROPEAN PATENT APPLICATION

(11) **EP 4 848 400 A1**
(43) Date of publication of application: **02.12.2026**
(21) Application number: 25747926.1
(22) Date of filing: 26.01.2025
(51) Int. Cl.: H01M 10/0585, H01M 10/0525, H01M 4/133

(54) **ELECTRODE ASSEMBLY, BATTERY CELL AND SECONDARY BATTERY**

(30) Priority: 04.02.2024 CN 202410162126
(71) Applicant: GUANGDONG OPPO MOBILE TELECOMMUNICATIONS CORP., LTD., Dongguan, Guangdong 523860 (CN)
(72) Inventor: XIE, Hongbin, Dongguan, Guangdong 523860 (CN)
(74) Representative: Grassi, Stefano
(86) International application number: PCT/CN2025/075114
(87) International publication number: WO 2025/162359

(57) **Abstract**

The disclosure relates to the technical field of secondary batteries, and in particular to an electrode assembly, a battery cell and a secondary battery. The electrode assembly includes a first electrode plate, a second electrode plate and a separator. The first electrode plate includes a first electrode material and a second electrode material. An expansion rate of the first electrode material is greater than an expansion rate of the second electrode material. The first electrode plate has positions subjected to different stresses, and the greater the stress to which a position of the first electrode plate is subjected, the larger a mass percentage of the first electrode material at the position.

## Description

### CROSS-REFERENCE OF RELATED APPLICATIONS

This application claims priority to Chinese Patent Application No. 2024101621262, filed February 04, 2024, and entitled "ELECTRODE ASSEMBLY, BATTERY CELL AND SECONDARY BATTERY", and the entire contents of which are incorporated herein by reference.

### TECHNICAL FIELD

The disclosure relates to the technical field of secondary batteries, and in particular to an electrode assembly, a battery cell and a secondary battery.

### BACKGROUND

With economic and social development, consumer electronics such as a mobile phone and an electric vehicle have increasingly higher requirements for endurance, and the energy density of the existing secondary batteries has gradually failed to meet the requirements. Improving the specific capacities of positive and negative electrode plates is an effective way to increase the energy density of the battery. The use of two different active materials in an electrode plate is conducive to improving the specific capacity of the electrode plate. Taking the negative electrode plate as an example, the specific capacity of the negative electrode plate can be improved by adding a silicon-based material to a conventional graphite negative electrode. However, the silicon-based material has a problem of large volume swelling (expansion) during lithium intercalation, which affects the cycle life of the battery. Therefore, how to improve the cycle life of the battery is an urgent problem to be solved.

### SUMMARY

In view of this, according to various embodiments of the disclosure, an electrode assembly is provided in a first aspect. The technical solution of the electrode assembly is as follows.

The electrode assembly includes a first electrode plate, a second electrode plate and a separator, and the separator is located between the first electrode plate and the second electrode plate. The first electrode plate includes a first electrode material and a second electrode material, and an expansion rate of the first electrode material is greater than an expansion rate of the second electrode material. The first electrode plate has positions subjected to different stresses, and the greater the stress to which a position of the first electrode plate is subjected, the larger a mass percentage of the first electrode material at the position. The mass percentage of the first electrode material at a certain position refers to a percentage of a mass of the first electrode material at the certain position relative to a total mass of the first electrode material and the second electrode material at the certain position.

According to various embodiments of the disclosure, a cell is provided in a second aspect. The technical solution of the cell is as follows.

The cell includes the electrode assembly as described above and an electrolyte.

According to various embodiments of the disclosure, a secondary battery is provided in a third aspect. The technical solution of the cell is as follows.

The secondary battery includes a battery case and the above-mentioned cell located in the battery case.

Compared with conventional solutions, the disclosure has the beneficial effects as follows.

In the disclosure, it adjusts, according to a stress condition of the first electrode plate, a mass distribution, in the first electrode plate, of the first electrode material having a larger expansion rate. When the stress on the first electrode plate at a certain position is greater that the stress on the first electrode plates at other positions, the mass percentage of the first electrode material of the first electrode material at this position is higher than the mass percentages of the first electrode material at other positions. The greater stress provides a higher binding force to suppress the stronger expansion (swelling) effect of the first electrode plate. This helps to suppressing repeated volume swelling and contraction of the first electrode plate during charging and discharging, which alleviates destruction and regeneration of the SEI film on the surface of the first electrode, thereby reducing capacity attenuation of the battery. Moreover, by suppressing the repeated volume swelling and contraction of the first electrode plate during charging and discharging, it can also alleviate the problem of failure resulted due to detachment from electrical contact caused by pulverization of the electrode material. In this way, the cycle life of the battery can be improved while increasing the specific capacity of the first electrode plate.

### BRIEF DESCRIPTION OF THE DRAWINGS

In order to more clearly illustrate technical solutions in the embodiments of the disclosure and the related art, drawings to be used in the embodiments and the related art are briefly described below. Apparently, the following drawings are merely some embodiments of the disclosure, and a person skilled in the art can obtain other drawings according to these drawings without paying any creative effort.
FIG. 1 is a schematic structural diagram of an electrode assembly according to some embodiments of the disclosure.
FIG. 2 is a schematic structural diagram of an electrode assembly according to some other embodiments of the disclosure.
FIG. 3 is a schematic structural diagram of an electrode assembly according to still other embodiments of the disclosure.
FIG. 4 is a schematic structural diagram of a first electrode plate according to some embodiments of the disclosure.
FIG. 5 is a schematic structural diagram of a cell according to some embodiments of the disclosure.
FIG. 6 is a schematic structural diagram of a secondary battery according to some embodiments of the disclosure.

### DETAILED DESCRIPTION OF PREFERRED EMBODIMENTS

The technical solutions in the embodiments of the disclosure will be clearly and comprehensively described below in conjunction with the drawings in the embodiments of the disclosure. Apparently, the described embodiments are only a part of the embodiments of the disclosure, not all of the embodiments. All other embodiments obtained by those skilled in the art based on the embodiments of the present disclosure without creative efforts shall fall within the protection scope of the disclosure.

Unless otherwise defined, all technical and scientific terms used herein have the same meaning as commonly understood by those skilled in the art of the disclosure. The terms used in the specification of the disclosure herein are only for the purpose of describing specific embodiments, and are not intended to limit the disclosure.

### Terms

Unless otherwise stated or there is a contradiction, the terms or phrases used herein have the following meanings.

In the disclosure, unless otherwise specified, "multiple pieces", "multiple", "multiple times", "plurality", etc., refer to a quantity greater than or equal to 2. For example, "one or more" means one, or more than or equal to two.

In the disclosure, "optionally", "optional" and "option" mean that the feature being modified is not mandatory, indicating a choice between with or without the feature. If there are multiple "optionally" in one technical solution, unless otherwise specified or there is a contradiction or mutual restriction, each "optionally" is independent from each other.

In the disclosure, terms such as "first", "second", "third", and "fourth" in "first aspect", "second aspect", "third aspect", "fourth aspect", etc. are only for descriptive purposes and should not be understood as indicating or implying relative importance or quantity, nor as implying the importance or quantity of the indicated technical features. Moreover, "first", "second", "third", "fourth", etc. are only for the purpose of non-exhaustive enumeration and description, and it should be understood that they do not constitute a closed limitation on the quantity.

In the disclosure, a first feature being "above" or "below" a second feature may include that the first feature and the second feature are in direct contact, or the first feature and the second feature are in indirect contact through an intermediate medium therebetween. Moreover, a first feature being "above", "over" or "on" a second feature may include that the first feature is directly above or obliquely above the second feature, or merely indicate that the first feature is horizontally higher than the second feature. A first feature being "below", "under" or "beneath" a second feature may include that the first feature is directly below or obliquely below the second feature, or merely indicate that the first feature is horizontally lower than the second feature.

In the disclosure, a first feature and a second feature being "stacked" may include that the first feature and the second feature are in direct contact, or that the first and second features are in indirect contact through an intermediate medium therebetween. The first feature and the second feature being "wound together" may include that the first feature and the second feature are in direct contact, or that the first feature and the second feature are in indirect contact through an intermediate medium therebetween.

In the disclosure, a mass percentage of a first electrode material at a certain position refers to a percentage of a mass of the first electrode material at the position relative to a total mass of the first electrode material and a second electrode material at the position. A mass percentage of a third electrode material at a certain position refers to a percentage of a mass of the third electrode material at the position relative to a total mass of the third electrode material and a fourth electrode material at the position.

In the disclosure, a stress to which a first electrode plate is subjected (also referred to as a stress on the first electrode plate) refers to the stress to which a certain position of the first electrode plate is subjected in an electrode assembly. A stress to which a second electrode plate is subjected (also referred to as a stress on the second electrode plate) refers to the stress to which a certain position of the second electrode plate is subjected in the electrode assembly.

To improve the specific capacity of conventional graphite negative electrode plates, a silicon-based material is added to the graphite negative electrode. Silicon has an extremely high theoretical specific capacity. Under a normal temperature condition, silicon may form a Li₁₅Si₄ alloy with a theoretical capacity of 3579 mAh/g. Silicon-carbon negative electrodes have advantages such as high specific capacity (approximately 10 times that of existing graphite negative electrodes), low lithium deintercalation potential (0.2-0.4V vs Li), non-toxicity, and abundant reserves (the abundance of crustal elements is second only to oxygen). The silicon-carbon negative electrodes are replacing conventional graphite negative electrodes, as a new generation of secondary battery negative electrodes with high specific energy and high energy density. However, the silicon-based material has a problem of large volume swelling during lithium intercalation. Under full lithium intercalation, the volume swelling may reach 300%. Repeated volume swelling and contraction during charging and discharging may easily cause repeated destruction and regeneration of the Solid Electrolyte Interphase (SEI) film on the surface of the electrode, thereby resulting in attenuation of battery capacity. Moreover, it may cause the negative electrode material to be pulverized and be detached from electrical contact, and consequently fails. Both of the above problems lead to a reduced cycle life of the battery, thus limiting industrial application. To suppress the volume swelling and contraction of the silicon-based material during lithium deintercalation, there is a method of coating a carbon layer on the surface of the silicon-based material. However, this rigid core-shell structure has high brittleness, and the surface carbon layer is easily broken during expansion and contraction, which results in a decrease in the Initial Coulombic Efficiency (ICE) of the silicon-carbon negative electrode and a shorter cycle life. It can be seen that this improvement is not insufficient for practical applications of the silicon-carbon negative electrodes.

In addition to the silicon-carbon negative electrodes, to improve the energy density of the electrode plate, another research direction is to use two different active materials in other electrode plates. During research, since the two different active materials have different expansion rates, the active material with a higher expansion rate undergoes volume swelling and contraction, which results in the same problem of short cycle life as the above silicon-carbon negative electrode.

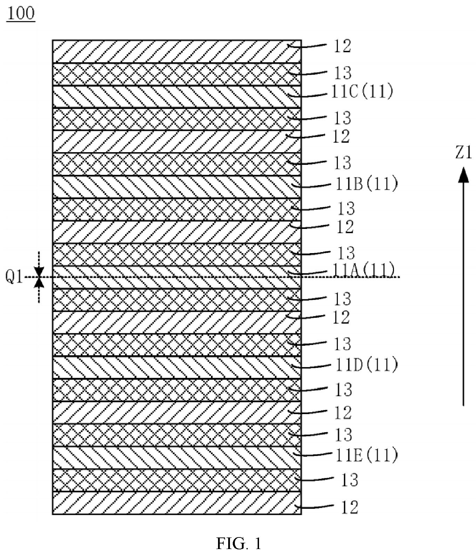

To alleviate the above problems, the disclosure shifts the focus from the improvement of electrode plates to the structural design of the electrode assembly. Referring to FIG. 1, in some embodiments, the electrode assembly 100 includes a first electrode plate 11 and a second electrode plate 12. The first electrode plate 11 includes multiple first electrode plates 11 being stacked along a Z1 direction. The second electrode plate 12 include multiple second electrode plates 12, and the multiple second electrode plates 12 and the multiple first electrode plates 11 are alternately stacked (e.g., one second electrode plate 12 is stacked on one first electrode plate 11, another first electrode plate 11 is stacked on the one second electrode plate 12, another second electrode plate 12 is stacked on the another first electrode plate 11, and so on). The electrode assembly 100 further includes a separator 13. The separator 13 include multiple separators 13, and each separator 13 is located between a respective first electrode plate 11 and a respective second electrode plate 12.

The multiple first electrode plates 11 collectively (as a whole) include a first electrode material and a second electrode material. Specifically, an expansion rate of the first electrode material is greater than an expansion rate of the second electrode material, and each first electrode plate 11 independently includes at least one of the first electrode material and the second electrode material (that is, the materials of the individual first electrode plates may be independently selected from each other, and each first electrode plate 11 may include at least one of the first electrode material and the second electrode material).

The mass percentages of the first electrode material at different positions of a same first electrode plate are the same and denoted as Mₙ. Along a stacking direction Z1 illustrated in FIG. 1, Mₙ of each first electrode plate increases as the first electrode plate being closer to a stacking center Q1 (that is, the closer a first electrode plate is to the stacking center Q1, the larger the Mₙ of the first electrode plate is). In some implementations, Mₙ of each first electrode plate is a value independently selected from 0 to 100% (that is, Mₙ of the individual first electrode plates may be independently selected from each other, and Mₙ of each first electrode plate may be one selected from 0 to 100%). For example, Mₙ may be 0, 10%, 20%, 30%, 40%, 50%, 60%, 70%, 80%, 90%, or 100%.

In the embodiments, the closer a first electrode plate 11 is to the stacking center Q1, the greater the stress on the first electrode plate 11; and the farther away a first electrode plate 11 is from the stacking center Q1, the smaller the stress on the first electrode plate 11. For the multiple first electrode plates 11, the first electrode plate 11 being closer to the stacking center Q1 has a larger Mₙ, and the first electrode plate 11 being farther from the stacking center Q1 has a smaller Mₙ (that is, the closer a first electrode plate 11 is to the stacking center Q1, the larger the Mₙ of the first electrode plate 11 is; and the farther away a first electrode plate 11 is from the stacking center Q1, the smaller the Mₙ of the first electrode plate 11 is). The mass distribution of the first electrode material with a larger expansion rate of the multiple first electrode plates 11 is adjusted based on the stress conditions of the multiple first electrode plates 11. When the stress on a certain first electrode plate 11 is greater that the stresses on other first electrode plates 11, Mₙ of this first electrode plate 11 is larger, and the greater stress provides a higher binding force to first electrode plate 11 to suppress the stronger expansion (swelling) effect of the first electrode plate 11. This helps to suppressing repeated volume swelling and contraction of the first electrode plate 11 during charging and discharging, which alleviates destruction and regeneration of the SEI film on the surface of the first electrode 11, thereby reducing capacity attenuation of the battery. Moreover, by suppressing the repeated volume swelling and contraction of the first electrode plate 11 during charging and discharging, it can also alleviate the problem of failure resulted due to detachment from electrical contact caused by pulverization of the electrode material. In this way, the cycle life of the battery can be improved while increasing the specific capacity of the first electrode plate 11.

In some implementations, there is one first electrode plate 11 being closest to the stacking center Q1, and the mass percentage of the first electrode material at each position of this first electrode plate 11 is denoted as M₀. A difference ΔM in the mass percentage of the first electrode material between two adjacent first electrode plates 11 satisfies: ΔM = M₀ × K, where K represents the ratio of the difference in the stresses on the two adjacent first electrode plates to the stress on the first electrode plate being closest to the stacking center Q1. For example, in the embodiments illustrated in FIG. 1, there are five first electrode plates 11, and the first electrode plate 11A is closest to the stacking center Q1. Along the stacking direction Z1, the first electrode plate 11B and the first electrode plate 11C sequentially follow the first electrode plate 11A. Along an opposite direction of the stacking direction Z1, the first electrode plate 11D and first electrode plate 11E sequentially follow the first electrode plate 11A. M₀ represents the mass percentage of the first electrode material at each position of the first electrode plate 11A, and N₀ represents the value of the stress to which the first electrode plate 11A is subjected. M₁ represents the mass percentage of the first electrode material at each position of the first electrode plate 11B, and N₁ represents the value of the stress to which the first electrode plate 11B is subjected. M₂ represents the mass percentage of the first electrode material at each position of the first electrode plate 11C, and N₂ represents the value of the stress to which the first electrode plate 11C is subjected. M₃ represents the mass percentage of the first electrode material at each position of the first electrode plate 11D, and N₃ represents the value of the stress to which the first electrode plate 11D is subjected. M₄ represents the mass percentage of the first electrode material at each position of the first electrode plate 11E, and N₄ represents the value of the stress to which the first electrode plate 11E is subjected. ΔM represents a difference between M₁ and M₀, a difference between M₂ and M₁, a difference between M₃ and M₀, or a difference between M₄ and M₃. Specifically, M₁ - M₀ = M₀ × (N₁ - N₀)/N₀, M₂ - M₁ = M₀ × (N₂ - N₁)/N₀, M₃ - M₀ = M₀ × (N₃ - N₀)/N₀, M₄ - M₃ = M₀ × (N₄ - N₃)/N₀.

It can be understood that a pressure sensor may be used to measure the stress to which the first electrode plate 11 is subjected. In the embodiments, N₀ is measured as 20 N, N₁ is measured as 14 N, N₂ is measured as 8 N, N₃ is measured as 14 N, N₄ is measured as 8 N. Along the stacking direction Z1 and along the opposite direction of the stacking direction Z1, a linear relationship N = -6x + 20 is established, where x is related to the arrangement/distribution of the first electrode plates 11, x being 0 represents the first electrode plate 11A, x being 1 represents the first electrode plate 11B and the first electrode plate 11D, and x being 2 represents the first electrode plate 11C and the first electrode plate 11E.

In some other embodiments, the difference in the stresses on every two adjacent first electrode plates 11 may be different from each other, or the differences may have different values. According to the actual difference, the difference ΔM in the mass percentage of the first electrode material between the two adjacent first electrode plates is obtained.

The differences ΔM in the mass percentage of the first electrode material between every two adjacent first electrode plates 11 may be or may not be related to the difference in the stresses on the two adjacent first electrode plates. In some embodiments, the differences ΔM in the mass percentage of the first electrode material between every two adjacent first electrode plates 11 are the same. In some implementations, each ΔM is a value within the range of 1% to 99%. For example, each ΔM is 1%, 10%, 20%, 30%, 40%, 50%, 60%, 70%, 80%, 90%, or 99%. In some other embodiments, ΔM of two adjacent first electrode plates 11 is a random value. In some implementations, each ΔM may take any value within the range of 1% to 99%, for example, each ΔM is independently selected, and may be 1%, 10%, 20%, 30%, 40%, 50%, 60%, 70%, 80%, 90%, or 99%.

In some implementations, there are two first electrode plates being closest to the stacking center, and the mass percentage of the first electrode material at each position of each of the two first electrode plates is denoted as M₀'. Except for a difference in the mass percentage of the first electrode material between the two first electrode plates 11 being closest to the stacking center, a difference ΔM' in the mass percentage of the first electrode material between other two adjacent first electrode plates satisfies: ΔM' = M₀' × K', where K' represents a ratio of the difference in the stresses on the other two adjacent first electrode plates to the stress on one of the two first electrode plates being closest to the stacking center.

It can be understood that, when there are two first electrode plates being closest to the stacking center, a distance between one of the two first electrode plates 11 and the stacking center is the same as a distance between the other one of the two first electrode plates 11 and the stacking center, stresses on the two first electrode plates 11 are the same, and the mass percentage of the first electrode material at each position of one of the two first electrode plates is the same as the mass percentage of the first electrode material at each position of the other one of the two first electrode plates.

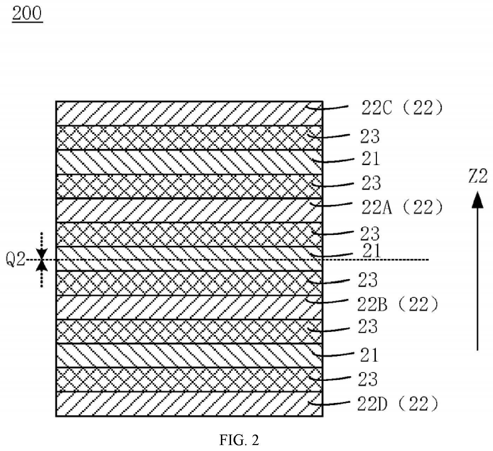

Referring to FIG. 2, in some other embodiments, the electrode assembly 200 includes a first electrode plate 22 and a second electrode plate 21. The first electrode plate 22 includes multiple first electrode plates 22 being stacked along a Z2 direction. The second electrode plate 21 include multiple second electrode plates 21, and the multiple second electrode plates 21 and the multiple first electrode plates 22 are alternately stacked. The electrode assembly 200 further includes a separator 23. The separator 23 include multiple separators 13, and each separator 23 is located between a respective first electrode plate 11 and a respective second electrode plate 12.

The multiple first electrode plates 22 collectively include a first electrode material and a second electrode material. Specifically, an expansion rate of the first electrode material is greater than an expansion rate of the second electrode material, and each first electrode plate 22 independently includes at least one of the first electrode material and the second electrode material.

The mass percentages of the first electrode material at different positions of a same first electrode plate are the same and denoted as Mₙ. Mₙ of each of the multiple first electrode plates increases as the first electrode plate being closer to a stacking center Q2 along a stacking direction Z2 illustrated in FIG. 2 (that is, the closer a first electrode plate is to the stacking center Q2, the larger Mₙ of the first electrode plate is). In some implementations, Mₙ of each first electrode plate is a value independently selected from 0 to 100%. For example, Mₙ may be 0, 10%, 20%, 30%, 40%, 50%, 60%, 70%, 80%, 90%, or 100%.

In the embodiments of FIG. 2, there are four first electrode plates 22, and two first electrode plates 11 are closest to the stacking center Q2, namely the first electrode plate 22A and the first electrode plate 22B. Along the stacking direction Z2, the first electrode plate 22C follows the first electrode plate 22B. Along an opposite direction of the stacking direction Z2, the first electrode plate 22D follows the first electrode plate 22B. The mass percentage of the first electrode material at each position of the first electrode plate 22A is the same as the mass percentage of the first electrode material at each position of the first electrode plate 22B, and both are denoted as M₀'. The value of the stress on the first electrode plate 22A is the same as the value of the stress value on the first electrode plate 22B, and both are denoted as N₀'. The mass percentage of the first electrode material at each position of the first electrode plate 22C is denoted as M₁', and the value of the stress on the first electrode plate 22C is denoted as N₁'. The mass percentage of the first electrode material at each position of the first electrode plate 22D is denoted as M₂', and the value of the stress on the first electrode plate 22D is denoted as N₂'. ΔM₁' represents a difference between M₁' and M₀', or a difference between M₂' and M₀'. Specifically, M₁'-M₀'= M₀'×(N₁'-N₀')/N₀', and M₂'-M₀'=M₀'×(N₂'-N₀')/N₀'.

In some other embodiments, except for the difference in the mass percentage of the first electrode material between the two first electrode plates 22 being closest to the stacking center Q2, the differences in the stresses on every other two adjacent first electrode plates 22 may be different from each other, or the differences may have different values. According to the actual difference, the difference ΔM' in the mass percentage of the first electrode material between the two adjacent first electrode plates is obtained.

Except for the difference in the mass percentage of the first electrode material between the two first electrode plates 22 being closest to the stacking center Q2, the differences ΔM' in the mass percentage of the first electrode material between the other two adjacent first electrode plates 22 may be or may not be related to the difference in the stresses on the two adjacent first electrode plates. In some embodiments, the differences ΔM' in the mass percentage of the first electrode material between every other two adjacent first electrode plates 22 are the same. In some implementations, each ΔM' is a value within the range of 1% to 99%. For example, each ΔM' is 1%, 10%, 20%, 30%, 40%, 50%, 60%, 70%, 80%, 90%, or 99%. In some other embodiments, the difference ΔM' in the mass percentage of the first electrode material between the other two adjacent first electrode plates 22 is a random value. In some implementations, each ΔM' may take any value within the range of 1% to 99%, for example, each ΔM' is independently selected, and may be 1%, 10%, 20%, 30%, 40%, 50%, 60%, 70%, 80%, 90%, or 99%.

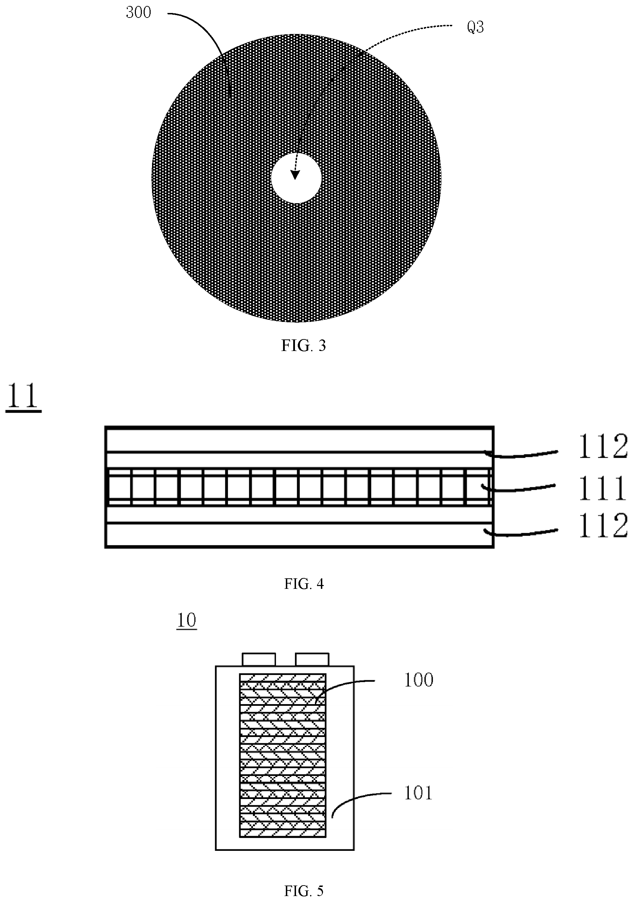

In the embodiments illustrated in FIG. 1 and FIG. 2, the multiple first electrode plates, the multiple second electrode plates, and the multiple separators are stacked. In some yet other embodiments, referring to FIG. 3, the multiple first electrode plates, the multiple second electrode plates, and the multiple separators are stacked and then wound together to obtain an electrode assembly 300, and the electrode assembly 300 has a winding center Q3. In this case, the mass percentages of the first active material at different positions of a same first electrode plate are different, and the closer a position of the first electrode plate is to the winding center Q3, the larger the mass percentage of the first electrode material at the position. In general, the greater the stress to which a position of the first electrode plate is subjected, the larger the mass percentage of the first electrode material at the position. That is, when the stress on the first electrode plate at a certain position is greater than the stresses on the first electrode plate at other positions, the mass percentage of the first electrode material at this position is larger than the mass percentages of the first electrode material at other positions. The greater stress provides a higher binding force to suppress the stronger expansion effect of the first electrode plate, which helps to suppress repeated volume swelling and contraction of the first electrode plate during charging and discharging, thereby improving the cycle life of the battery.

In the above embodiments, there are multiple first electrode plates, multiple second electrode plates and multiple separators. In some other embodiments, there are multiple first electrode plates, one second electrode plate, and multiple separators. In some still other embodiments, there are one first electrode plate, one second electrode plate, and one separator. Regardless of whether there is one or more first electrode plates, the first electrode plate satisfies a condition that the greater the stress to which a position of the first electrode plate is subjected, the larger a mass percentage of the first electrode material at the position of the first electrode plate. When there is one first electrode plate, the first electrode plate includes the first electrode material and the second electrode material.

It can be understood that the contents of the first electrode material and the second electrode material in the first electrode plate are designed according to a requirement to the capacity of the first electrode plate.

In some implementations, the first electrode plate is a negative electrode plate, the first electrode material includes one or more of SiO, Si and SiC, and the second electrode material includes graphite.

In a case where the design requirement for the capacity of the negative electrode is to be 500 mAh/g, according to the capacity of graphite being 350 mAh/g, and the capacity of Si being 1500 mAh/g, a total capacity of 500 mAh/g is achieved by controlling the contents of Si and graphite.

In some implementations, the first electrode plate is a positive electrode plate, the first electrode material includes one or more of Li, Na, K, Mg and Al, and the second electrode material includes one or more of lithium cobalt oxide, lithium nickel cobalt aluminum oxide and lithium iron phosphate.

In some implementations, referring to FIG. 4, in some embodiments, the first electrode plate 11 includes a current collector 111 and an electrode active layer 112 located on the current collector 111, and the first electrode material and the second electrode material are provided in the electrode active layer 112. In the embodiments illustrated in FIG. 4, the electrode active layer 112 is provided on both sides of the current collector 111. In some other embodiments, the electrode active layer 112 may alternatively be provided on one side of the current collector 111.

In some examples, the first electrode plate is a negative electrode plate, the negative electrode plate includes a current collector and a negative electrode active layer located on the current collector, and the first electrode material and the second electrode material are provided in the negative electrode active layer. In this case, a copper foil is selected as the current collector. When there are multiple negative electrode plates, there are multiple current collectors accordingly, each of the multiple current collectors is independently provided with the negative electrode active layer on one side or both sides of the current collector. In some implementations, the negative electrode active layer further includes an adhesive (binder) and a conductive agent.

In some examples, the first electrode plate is a positive electrode plate, the positive electrode plate includes a current collector and a positive electrode active layer located on the current collector, and the first electrode material and the second electrode material are provided in the positive electrode active layer. In this case, an aluminum foil is selected as the current collector. When there are multiple positive electrode plates, there are multiple current collectors accordingly, each of the multiple current collectors is independently provided with the positive electrode active layer on one side or both sides of the current collector. In some implementations, the positive electrode active layer further includes an adhesive and a conductive agent.

In the above embodiments, the first electrode plate includes the first electrode material and the second electrode material that have different expansion rates, and the second electrode plate does not include electrode materials that have different expansion rates. In some other embodiments, the second electrode plate includes a third electrode material and a fourth electrode material that have different expansion rates, so as to improve the energy density of the second electrode plate.

In some embodiments, there are multiple second electrode plates, the multiple second electrode plates and multiple first electrode plates are alternately stacked, the multiple second electrode plates collectively include the third electrode material and the fourth electrode material. Specifically, the expansion rate of the third electrode material is greater than the expansion rate of the fourth electrode material, and each second electrode plate independently includes at least one of the third electrode material and the fourth electrode material (that is, the materials of the individual second electrode plates may be independently selected from each other, and each second electrode plate may include at least one of the third electrode material and the fourth electrode material).

The mass percentages of the third electrode material at different positions of a same second electrode plate are the same and denoted as mₙ. Along a stacking direction, mₙ of each second electrode plate increases as the second electrode plate being closer to a stacking center (that is, the closer the second electrode plate is to the stacking center, the larger mₙ of the second electrode plate is). In some implementations, mₙ of each second electrode plate is a value independently selected from 0 to 100%. For example, mₙ may be 0, 10%, 20%, 30%, 40%, 50%, 60%, 70%, 80%, 90%, or 100%.

In the embodiments, the closer a second electrode plate is to the stacking center, the greater the stress on the second electrode plate; and the farther away a second electrode plate is from the stacking center, the smaller the stress on the second electrode plate. For the multiple second electrode plates, the second electrode plate being closer to the stacking center has a larger mₙ, and the second electrode plate being farther from the stacking center has a smaller mₙ (that is, the closer a second electrode plate is to the stacking center, the larger the mₙ of the second electrode plate is; and the farther away a second electrode plate is from the stacking center, the smaller the mₙ of the second electrode plate). The mass distribution of the third electrode material with a larger expansion rate of the multiple second electrode plates is adjusted based on the stress conditions of the multiple second electrode plates. When the stress on a certain second electrode plate is greater that the stresses on other second electrode plates, mₙ of the certain second electrode plate is larger, and the greater stress provides a higher binding force to second electrode plate to suppress the stronger expansion effect of the second electrode plate. This helps to suppressing repeated volume swelling and contraction of the second electrode plate during charging and discharging, which alleviates destruction and regeneration of the SEI film on the surface of the second electrode, thereby reducing capacity attenuation of the battery. Moreover, by suppressing the repeated volume swelling and contraction of the second electrode plate during charging and discharging, it can also alleviate the problem of failure resulted due to detachment from electrical contact caused by pulverization of the electrode material. In this way, the cycle life of the battery can be improved while increasing the specific capacity of the second electrode plate.

In some implementations, there is one second electrode plate being closest to the stacking center, and the mass percentage of the third electrode material at each position of this second electrode plate is denoted as m₀. A difference Δm in the mass percentage of the third electrode material between two adjacent second electrode plates satisfies: Δm = m₀ × k, where k represents the ratio of the difference in the stresses on the two adjacent second electrode plates to the stress on the second electrode plate being closest to the stacking center.

It can be understood that a pressure sensor may be used to measure the stress to which the second electrode plate is subjected.

In some other embodiments, the difference in the stresses on every two adjacent second electrode plates may be different from each other, or the differences may have different values. According to the actual difference, the difference Δm in the mass percentage of the third electrode material between the two adjacent second electrode plates is obtained.

The differences Δm in the mass percentage of the third electrode material between every two adjacent second electrode plates may be or may not be related to the difference in the stresses on the two adjacent second electrode plates. In some embodiments, the differences Δm in the mass percentage of the third electrode material between every two adjacent second electrode plates are the same. In some alternative implementations, each Δm is a value within the range of 1% to 99%. For example, each Δm is 1%, 10%, 20%, 30%, 40%, 50%, 60%, 70%, 80%, 90%, or 99%. In some other embodiments, the differences Δm in the mass percentage of the third electrode material between every two adjacent second electrode plates are a random value. In some implementations, each Δm may take any value within the range of 1% to 99%, for example, each Δm is independently selected, and may be 1%, 10%, 20%, 30%, 40%, 50%, 60%, 70%, 80%, 90%, or 99%.

In some implementations, there are two second electrode plates being closest to the stacking center, and the mass percentage of the third electrode material at each position of each of the two second electrode plates is denoted as m₀'. Except for a difference in the mass percentage of the third electrode material between the two second electrode plates being closest to the stacking center, a difference Δm' in the mass percentage of the third electrode material between other two adjacent second electrode plates satisfies: Δm' = m₀' × k', where k' represents a ratio of the difference in the stresses on the other two adjacent second electrode plates to the stress on one of the two second electrode plates being closest to the stacking center.

It can be understood that, when there are two second electrode plates being closest to the stacking center, a distance between one of the two second electrode plates and the stacking center is the same as a distance between the other of the two second electrode plates and the stacking center, stresses on the second electrode plates are the same stress, and the mass percentage of the third electrode material at each position of one of the two second electrode plates is the same as the mass percentage of the third electrode material at each position of the other of the two second electrode plate.

In some other embodiments, except for the difference in the mass percentage of the third electrode material between the two second electrode plates 22 being closest to the stacking center, the differences in the stresses on every two of the other adjacent second electrode plates may be different from each other, or the differences may have different values. According to the actual difference, the difference Δm' in the mass percentage of the third electrode material between the two adjacent second electrode plates is obtained.

Except for the difference in the mass percentage of the third electrode material between the two second electrode plates being closest to the stacking center, the difference Δm' in the mass percentage of the third electrode material between every other two adjacent second electrode plates may be or may not be related to the difference in the stresses on the two adjacent first electrode plates. In some embodiments, the differences Δm' in the mass percentage of the third electrode material between every other two adjacent second electrode plates are the same. In some implementations, each Δm' is a value within the range of 1% to 99%. For example, each Δm' is 1%, 10%, 20%, 30%, 40%, 50%, 60%, 70%, 80%, 90%, or 99%. In some other embodiments, the difference Δm' in the mass percentage of the third electrode material between every other two adjacent second electrode plates is a random value. In some implementations, each Δm' may take any value within the range of 1% to 99%, for example, each Δm' is independently selected, and may be 1%, 10%, 20%, 30%, 40%, 50%, 60%, 70%, 80%, 90%, or 99%.

In the above embodiments, the multiple first electrode plates, the multiple second electrode plates and the multiple separators are stacked. In some still yet other embodiments, the multiple first electrode plates, the multiple second electrode plates, and the multiple separators are stacked and then wound together. In this case, the mass percentages of the third active material at different positions of a same second electrode plate are different, and the closer a position of the second electrode plate is to the winding center, the greater the mass percentage of the third electrode material at that position. In general, different positions of the second electrode plate are subjected to different stresses, and the greater the stress to which a position of the second electrode plate is subjected, the larger a mass percentage of the third electrode material at the position. In other words, when the stress on the second electrode plate at a certain position is greater than the stresses on the second electrode plate at other positions, the mass percentage of the third electrode material at this position is higher than the mass percentages of the third electrode material at other positions. The greater stress provides a higher binding force to suppress the stronger expansion effect of the second electrode plate, which helps to suppress repeated volume swelling and contraction of the second electrode plate during charging and discharging, thereby improving the cycle life of the battery.

In the above embodiments, there are multiple second electrode plates. In some other embodiments, there is one second electrode plate. Regardless of whether there is one or more second electrode plates, the second electrode plate satisfies a condition that the greater the stress to which a position of the second electrode plate is subjected, the greater the mass percentage of the third electrode material at the position of the second electrode plate. When there is one second electrode plate, the second electrode plate includes the third electrode material and the fourth electrode material.

It can be understood that the contents of the third electrode material and the fourth electrode material in the second electrode plate are designed according to a requirement to the capacity of the second electrode plate.

In some alternative implementations, the first electrode material includes one or more of SiO, Si and SiC, the second electrode material includes graphite, the third electrode material includes one or more of Li, Na, K, Mg and Al, and the fourth electrode material includes one or more of lithium cobalt oxide, lithium nickel cobalt aluminum oxide and lithium iron phosphate.

In some implementations, the second electrode plate includes a current collector and an electrode active layer located on the current collector, and the third electrode material and the fourth electrode material are provided in the electrode active layer.

In some implementations, the electrode active layer is located on one side or both sides of the current collector.

In order to improve the cycle performance of the battery while increasing the specific capacity and energy density of the electrode plate, the disclosure shifts the focus from improving the electrode plate to the structural design of the electrode assembly. Different from the conventional design of the material and structure of the electrode plate itself, the embodiments of the disclosure starts from the structure of the electrode assembly and adjusts, based on the stress condition of the electrode plate in the electrode assembly, the mass distribution of the electrode material with a larger expansion rate in the electrode plate. The mass percentage of the electrode material with a larger expansion rate is larger at the position being subjected to a larger stress. The binding force provided by the stress suppresses the swelling of the electrode plate during repeated charging and discharging, which makes the electrode plate more stable, reduces lithium plating, and alleviates pulverization of the electrode material, thereby increasing the battery capacity and improving the cycle life of the battery.

According to a second aspect of the disclosure, a cell is provided. Referring to FIG. 5, in some embodiments, a cell 10 includes the electrode assembly 100 as described above and an electrolyte 101.

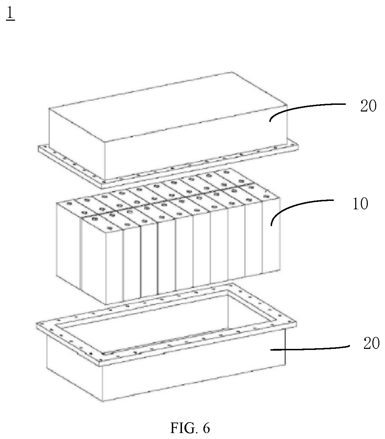

According to a third aspect of the disclosure, a secondary battery is provided. Referring to FIG. 6, in some embodiments, a secondary battery 1 includes a battery case 20 and the above-mentioned cell 10 located in the battery case 20.

The disclosure will be further described below in conjunction with specific examples and comparative examples. Unless otherwise specified, the raw materials involved in the following specific examples and comparative examples are all commercially available, the instruments used are all commercially available, and the processes involved are all conventional choices for those skilled in the art.

### Example

A negative electrode active material, SBR, and ultra-fine graphite were mixed in a mass ratio of 9:5:5, an appropriate amount of solvent NMP was added, and 5 parts of negative electrode slurry were prepared. The negative electrode active material in each of the 5 parts of negative electrode slurry included Si and graphite, and the percentage of the mass of Si in each part of the negative electrode slurry relative to the total mass of Si and graphite in the slurry is shown in Table 1. The 5 parts of negative electrode slurry were respectively coated on both sides of 5 parts of copper foil having a thickness of 5 µm, and a negative electrode active layer with a thickness of 45 µm was formed on each of both sides of the 5 parts of copper foil, thereby obtaining 5 parts of negative electrode plates.

Lithium cobalt oxide, acetylene black, and PVDF were mixed in a mass ratio of 8:1.5:0.5, an appropriate amount of solvent NMP was added, and 6 parts of positive electrode slurry were prepared. 4 parts of the positive electrode slurry were respectively coated on both sides of 4 parts of aluminum foil having a thickness of 8 µm, and a positive electrode active layer having a thickness of 60 µm was formed on both sides of each of the 4 parts of aluminum foil. The remaining 2 parts of the positive electrode slurry were respectively coated on one side of 2 parts of aluminum foil having a thickness of 8 µm, and a positive electrode active layer having a thickness of 60 µm was formed on one side of each of the 2 parts of aluminum foil. Thus, a total of 6 parts of positive electrode plates were obtained.

A separator has a thickness of 5 µm and is made of PE, the 5 parts of the negative electrode plates 11 and the 6 parts of the positive electrode plates 12 were stacked according to the structure illustrated in FIG. 1. Specifically, the positive electrode plates having the positive electrode active layer on one side thereof were located at the outermost sides, and the electrode assembly was prepared by pressing the plates.

The values of the stresses on the 5 parts of the negative electrode plates in the electrode assembly were tested, and the results are shown in Table 1.

Testing: The electrode assembly, an electrolyte, and an aluminum plastic film were assembled into a pouch cell. At 25°C, the cell was charged and discharged at a rated rate, specifically: constant current-constant voltage (CCCV) charging to a cut-off voltage, and then discharging to 3.0 V at 1 C-Rate. The ratios of the capacity after 200 cycles, 500 cycles, 1000 cycles, and 1600 cycles to the initial capacity were recorded. The results are shown in Table 1.

**Table 1**

| | Mass percentage of Si (wt%) | Stress value (N) | Cycle life |
|---|---|---|---|
| 11C | 2 | 8 | 200cycle: 98% |
| 11B | 4 | 14 | 500cycle: 96.5% |
| 11A | 6 | 20 | 1000cycle: 90% |
| 11D | 4 | 14 | 1600cycle: 84% |
| 11E | 2 | 8 | |

### Comparative Example

The preparation method of the electrode assembly in the comparative example was basically the same as that in the example, with the main difference lie in the percentage of the mass of Si in each part of the negative electrode slurry relative to the total mass of Si and graphite in the slurry, as shown in Table 2. The cycle life of the comparative example was tested with reference to the method in the example, and the results are shown in Table 2.

**Table 2**

| | Mass percentage of Si (wt%) | Stress value (N) | Cycle life |
|---|---|---|---|
| 11C | 5 | 8 | 200cycle: 97.5% |
| 11B | 5 | 14 | 500cycle: 92% |
| 11A | 5 | 20 | 1000cycle: 83% |
| 11D | 5 | 14 | 1600cycle: 76% |
| 11E | 5 | 8 | |

It can be seen that the electrode assembly of the example can suppress the volume swelling of the negative electrode plate and has a better cycle life.

The various technical features of the above-described embodiments may be combined arbitrarily. To make the description concise, not all possible combinations of the various technical features in the embodiments are described. However, as long as there is no contradiction in the combination of these technical features, all combinations of these technical features should be considered to be within the scope of the specification.

The foregoing embodiments illustrates only several implementations of the disclosure and are described in detail, which however are not to be construed as a limitation to the scope of this disclosure. It is notable that, for those skilled in the art, several modifications and improvements can be made without departing from the concept of this disclosure, but all of them should fall within the protection scope of the disclosure. Therefore, the protection scope of the disclosure should be subject to the appended claims.

## Claims

1. An electrode assembly, comprising: a first electrode plate, a second electrode plate and a separator, wherein the separator is located between the first electrode plate and the second electrode plate; the first electrode plate comprises a first electrode material and a second electrode material, an expansion rate of the first electrode material is greater than an expansion rate of the second electrode material, the first electrode plate has positions subjected to different stresses, and the greater the stress to which a position of the first electrode plate is subjected, the larger a mass percentage of the first electrode material at the position; and a mass percentage of the first electrode material at a certain position refers to a percentage of a mass of the first electrode material at the certain position relative to a total mass of the first electrode material and the second electrode material at the certain position.

2. The electrode assembly as claimed in claim 1, wherein the first electrode plate comprises a plurality of first electrode plates, the plurality of first electrode plates collectively comprise the first electrode material and the second electrode material, and each of the plurality of first electrode plates independently comprises at least one of the first electrode material and the second electrode material.

3. The electrode assembly as claimed in claim 2, wherein the plurality of first electrode plates, the second electrode plate and the separator are stacked, the mass percentages of the first electrode material at different positions of a same first electrode plate are the same and denoted as Mₙ, and Mₙ of each of the plurality of first electrode plates increases as the first electrode plate is closer to a stacking center along a stacking direction.

4. The electrode assembly as claimed in claim 3, wherein there is one first electrode plate being closest to the stacking center, the mass percentage of the first electrode material at each position of the first electrode plate being closest to the stacking center is denoted as M₀, a difference in the mass percentage of the first electrode material between two adjacent first electrode plates is denoted as ΔM, and ΔM is related or unrelated to a difference in the stresses on the two adjacent first electrode plates.

5. The electrode assembly as claimed in claim 4, wherein ΔM is unrelated to the difference in the stresses on the two adjacent first electrode plates, and ΔM satisfies a following condition: each ΔM takes any value within a range of 1% to 99%.

6. The electrode assembly as claimed in claim 4, wherein ΔM is related to the difference in the stresses on the two adjacent first electrode plates, and ΔM satisfies a following condition: the differences ΔM in the mass percentage of the first electrode material between every two adjacent first electrode plates are the same, and each ΔM is within a range of 1% to 99%.

7. The electrode assembly as claimed in claim 4, wherein ΔM is related to the difference in the stresses on the two adjacent first electrode plates, and ΔM satisfies a following condition: ΔM = M₀ × K, where K represents a ratio of the difference in the stresses on the two adjacent first electrode plates to the stress on the first electrode plate being closest to the stacking center.

8. The electrode assembly as claimed in claim 3, wherein there are two first electrode plates being closest to the stacking center, the mass percentage of the first electrode material at each position of each of the two first electrode plates is denoted as M₀'; except for a difference in the mass percentage of the first electrode material between the two first electrode plates being closest to the stacking center, a difference in the mass percentage of the first electrode material between other two adjacent first electrode plates is denoted as ΔM', and ΔM' is related or unrelated to a difference in the stresses on the other two adjacent first electrode plates.

9. The electrode assembly as claimed in claim 8, wherein ΔM' is unrelated to the difference in the stresses on the other two adjacent first electrode plates, and ΔM' satisfies a following condition: each ΔM' takes any value within a range of 1% to 99%.

10. The electrode assembly as claimed in claim 8, wherein ΔM' is related to the difference in the stresses on the other two adjacent first electrode plates, and ΔM' satisfies a following condition: the differences ΔM' in the mass percentage of the first electrode material between the other two adjacent first electrode plates are the same, and each ΔM' is within a range of 1% to 99%.

11. The electrode assembly as claimed in claim 8, wherein ΔM' is related to the difference in the stresses on the other two adjacent first electrode plates, and ΔM' satisfies a following condition: ΔM' = M₀' × K', where K' represents a ratio of the difference in the stresses on the other two adjacent first electrode plates to the stress on one of the two first electrode plates being closest to the stacking center.

12. The electrode assembly as claimed in claim 2, wherein the plurality of first electrode plates, the second electrode plate and the separator are wound together, the mass percentages of a first active material at different positions of a same first electrode plate are different, and the closer a position is to a winding center, the larger the mass percentage of the first electrode material at the position.

13. The electrode assembly as claimed in any one of claims 1 to 12, wherein the first electrode plate comprises a current collector and an electrode active layer located on the current collector, and the first electrode material and the second electrode material are included in the electrode active layer.

14. The electrode assembly as claimed in any one of claims 1 to 13, wherein the second electrode plate comprises a third electrode material and a fourth electrode material, an expansion rate of the third electrode material is greater than an expansion rate of the fourth electrode material, and the second electrode plate has positions subjected to different stresses, the greater the stress to which a position of the second electrode plate is subjected, the larger a mass percentage of the third electrode material at the position; the mass percentage of the third electrode material at a certain position refers to a percentage of a mass of the third electrode material at the certain position relative to a total mass of the third electrode material and the fourth electrode material at the certain position.

15. The electrode assembly as claimed in any one of claims 1 to 14, wherein the first electrode material comprises one or more of SiO, Si and SiC, and the second electrode material comprises graphite.

16. The electrode assembly as claimed in any one of claims 1 to 14, wherein the first electrode material comprises one or more of Li, Na, K, Mg and Al, and the second electrode material comprises one or more of lithium cobalt oxide, lithium nickel cobalt aluminum oxide and lithium iron phosphate.

17. The electrode assembly as claimed in claim 14, wherein the third electrode material comprises one or more of SiO, Si and SiC, and the fourth electrode material comprises graphite.

18. The electrode assembly as claimed in claim 14, wherein the third electrode material comprises one or more of Li, Na, K, Mg and Al, and the fourth electrode material comprises one or more of lithium cobalt oxide, lithium nickel cobalt aluminum oxide and lithium iron phosphate.

19. A cell, comprising the electrode assembly as claimed in any one of claims 1 to 18 and an electrolyte.

20. A secondary battery, comprising a battery case and the cell as claimed in claim 19, the cell being located in the battery case.
